# FASCICULE DE BREVET EUROPEEN

(11) **EP 1 912 439 B1**
(45) Date de publication et mention de la délivrance du brevet: **31.08.2011**
(21) Numéro de dépôt: 07020006.8
(22) Date de dépôt: 12.10.2007
(51) Int. Cl.: H04N 7/16, H04N 7/24

(54) **Procédé de notification de changement de parametre d'emission et émetteur selon le procédé**
Benachrichtigungsverfahren über die Änderung von Sendeparametern und Sender gemäß dem Verfahren
Method of notifying a transmission parameter change and transmitter according to the method

(30) Priorité: 12.10.2006 FR 0608977
(43) Date de publication de la demande: 16.04.2008
(60) Demande divisionnaire: 11167326.5
(73) Titulaire: SAGEM MOBILES, 75015 Paris (FR)
(72) Inventeur: Pecqueur, Rémi, 92800 Puteaux (FR)
(74) Mandataire: Lang, Johannes

(56) Documents cités:
- US-A1- 2006 015 916
- VARE J ET AL: "Soft handover in terrestrial broadcast networks" MOBILE DATA MANAGEMENT, 2004. PROCEEDINGS. 2004 IEEE INTERNATIONAL CONFERENCE ON BERKELEY, CA, USA 19-22 JAN. 2004, LOS ALAMITOS, CA, USA,IEEE COMPUT. SOC, US, 19 janvier 2004 (2004-01-19), pages 236-242, XP010680966 ISBN: 0-7695-2070-7
- "Digital Video Broadcasting (DVB)" ETSI STANDARDS, EUROPEAN TELECOMMUNICATIONS STANDARDS INSTITUTE, SOPHIA-ANTIPO, FR, vol. BC, no. V121, novembre 2005 (2005-11), XP014032216 ISSN: 0000-0001
- "Digital Video Broadcasting (DVB)" ETSI STANDARDS, EUROPEAN TELECOMMUNICATIONS STANDARDS INSTITUTE, SOPHIA-ANTIPO, FR, vol. BC, no. V131, septembre 1997 (1997-09), XP014001574 ISSN: 0000-0001

## Description

### Domaine technique

L'invention concerne les réseaux de diffusion de services numériques à destination de terminaux mobiles et plus particulièrement le changement de fréquence d'émission d'au moins un service par un émetteur.

### Art antérieur

L'augmentation récente des demandes pour l'accès à la télévision numérique a amené la communauté scientifique à développer un système de diffusion hertzien de télévision numérique : le système DVB-T (Digital Video Broadcasting Terrestrial : télévision numérique terrestre). Le système DVB-T, défini entre autres par les standards ETSI EN 300 744 « Digital Video Broadcasting (DVB) ; Framing structure, channel coding and modulation for digital terrestrial television. (DVB-T) », ETSI EN 300 468 « Digital Video Broadcasting (DVB) ; Specification for Service Information (SI) in DVB systems. DVB-SI », est une technologie qui consiste à transmettre des flux de données numériques, telles que des données audio visuelles de type télévision qui peuvent être associées à des données numériques interactives du même type que celles qui sont transmises par un satellite mais via les réseaux hertziens existants à antennes. Ces flux de données numériques permettent le transport d'un ou plusieurs services numériques, un service numérique étant lui-même constitué d'un ou plusieurs flux élémentaires, contenant généralement au moins un flux vidéo et un flux audio, destinés à être décodés et restitués par un terminal, par exemple un téléviseur.

Bien qu'un tel système de transmission de données ait prouvé sa capacité à servir des terminaux fixes et portables, il a été ensuite adapté pour permettre à des terminaux ayant des capacités de traitement et des ressources limitées ainsi que des contraintes d'utilisation particulières d'accéder à ce type de flux de services. Cette adaptation a donné lieu au système normalisé dit DVB-H (Digital Video Broadcast-Handheld) défini par le standard ETSI EN 302 304 : « Digital Video Broadcasting (DVB); Transmission System for Handheld Terminals (DVB-H) ». Cette norme vise à permettre la diffusion de flux de services multimédias sur des terminaux mobiles qui, comme les téléphones mobiles, doivent répondre à des exigences spécifiques en terme de consommation de courant, de taille d'écran et de mobilité, Selon la norme DVB-H, les services transportés au sein d'un flux sont codés et multiplexés sur la base de la technologie MPEG-2 (Moving Picture Experts Group) système, standard ISO/IEC 13818, de manière à permettre le transport simultané de plusieurs services au sein d'un même flux de données. Chaque flux élémentaire de chaque service est encodé puis découpé en paquets de données, les paquets des différents flux élémentaires étant ensuite mélangés dans le flux de transport.

L'un des moyens mis en oeuvre dans la norme DVB-H pour permettre au terminal d'économiser son énergie est la transmission des données par salves (« burst » en anglais) dans un mode découpé temporellement («time slice» en anglais). Ce mode de transmission est détaillé dans le document « ETSI EN 301 192 V1.4.1; Digital Video Broadcasting (DVB) ; DVB specification for data broadcasting ». Le mode de transmission par salves consiste à transmettre un flux élémentaire devant parvenir au récepteur avec un débit moyen donné sous la forme de salves de données envoyées. Le terminal récepteur voit dans ces salves un moyen pour créer de manière virtuelle un temps mort entre chaque salve.

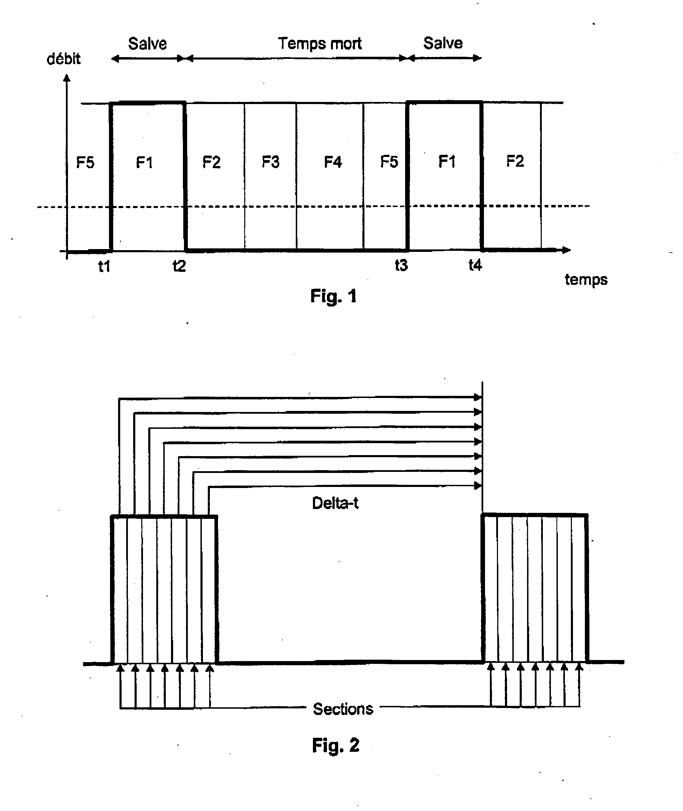

Le débit d'envoi de la salve et la durée du temps mort sont calculés de façon à ce que le débit moyen des données utiles envoyées obtenu soit le débit désiré. De cette façon, un récepteur intéressé par le service contenu dans ce flux élémentaire pourra interrompre ses moyens de réception pendant la durée du temps mort de façon à économiser son énergie. Ce mode est détaillé Fig. 1. On y voit un diagramme temporel de l'envoi de cinq flux élémentaires F1 à F5. La seconde dimension représente le débit en fonction du temps. Le trait en gras représente le débit en fonction du temps de l'envoi des données du premier flux F1. On voit que ces données sont reçues sous la forme de salves de données. Si l'on se place du point de vue du récepteur, une première salve est reçue entre le temps t1 et le temps t2. Aucune donnée du flux F1 n'est reçue entre t2 et t3, tandis qu'une seconde salve est reçue entre t3 et t4. Ce mode permet d'atteindre un débit moyen représenté par le trait en pointillé. Pendant le temps mort de la transmission du flux F1, il est possible de recevoir des salves correspondant à des flux élémentaires F2, F3, F4 et F5. Chaque flux va posséder des salves ayant leur propre durée. On voit donc que, si le récepteur n'a besoin que des données du flux F1, il peut couper ses moyens de réception entre t2 et t3 ce qui conduit à des économies d'énergie. De plus, le récepteur peut également mettre à profit le temps mort pour investiguer la réception sur d'autres fréquences du flux de transport pendant le temps mort et éventuellement décider d'un changement de fréquence pour une meilleure réception du service distribué sur un autre flux. Ce sera par exemple le cas pour un récepteur en mouvement qui devra passer d'une cellule de diffusion à une autre, mécanisme connu sous le nom de « handover » en anglais.

Un récepteur doit connaître la longueur du temps mort pour être en mesure de réveiller à temps ses moyens de réception de manière à pouvoir recevoir les données correspondant à la salve suivante. Le mécanisme utilisé pour informer le récepteur de la longueur du temps mort consiste en l'introduction de données, appelées données temps réel (« real time parameters » en anglais), dans le flux. Ce mécanisme est illustré Fig. 2. Sur cette figure, on voit deux salves successives d'un flux. Chaque salve est constituée d'un certain nombre de sections correspondant à des sections MPE (« Multi Protocol Encapsulation » en anglais), un protocole permettant l'encapsulation de divers autres protocoles. Ces sections MPE contiennent un en-tête et une partie données.

Une partie de cet en-tête est utilisée pour la transmission de ces données temps réel comprenant une information appelée delta-t indiquant la différence de temps entre le début de la section courante et le début de la prochaine salve. Le fait que cette information delta-t soit une indication du temps de début de la prochaine salve relative au début de la section courante contenant cette information et non une information temporelle absolue permet au récepteur de connaître le début de la prochaine salve indépendamment de toute latence introduite par la transmission. Ce mécanisme est par contre sensible au décalage temporel (« jitter » en anglais) introduit et qui doit rester inférieur à un seuil donné. Toutes les sections constituant la salve doivent donc contenir ces informations temps réel comprenant le delta-t indiquant le début de la prochaine salve. De cette façon, même dans un contexte de mauvaise réception, toute section correctement reçue permet au récepteur de connaître le début de la prochaine salve. Dans le cas contraire, le récepteur doit garder son module de réception allumé afin de récupérer au moins la première section puisqu'elle est non prédictive.

Nous avons vu que ce mécanisme de découpage temporel par salves permet au récepteur de pouvoir changer de fréquence sans nécessiter un second module de réception en offrant la possibilité d'utiliser le temps mort pour la recherche d'une éventuelle autre fréquence. Il est cependant des cas où le changement de fréquence devra intervenir à l'initiative, non pas du récepteur, mais de l'émetteur. Cela va se produire lorsque, par exemple, un émetteur constatera que du fait de son environnement fréquentiel, il doit changer sa fréquence d'émission pour éviter un conflit de fréquence. Dans ce cas, un flux, ou un sous ensemble de services du flux, émis sur une fréquence donnée va, à partir d'un moment donné, être émis sur une nouvelle fréquence. De façon à éviter la perte de réception du service, l'émetteur doit pouvoir notifier ce changement de fréquence au récepteur d'une manière qui permette à celui-ci de ne perdre aucune donnée. Le même problème se pose pour tout paramètre d'émission et pas seulement pour la fréquence.

### Exposé de l'invention

L'invention concerne un procédé de notification de changement de paramètre d'émission par un émetteur d'au moins un service numérique à destination de récepteurs dudit service numérique.

Cette notification se base sur l'envoi concomitant d'une information relative à la nouvelle fréquence d'émission du service et d'une information sur le moment de l'émission des premières données sur la nouvelle fréquence exprimée relativement au moment de l'émission d'une structure de données contenant lesdites informations. Cette notification pourra prendre, dans un mode particulier de réalisation de l'invention, la forme d'une section contenant la nouvelle fréquence et le moment d'émission de la première salve de données du service sur cette nouvelle fréquence exprimé à partir du moment d'émission de ladite section.

Par la connaissance de la nouvelle fréquence et du moment d'émission des premières données sur cette nouvelle fréquence, le récepteur peut programmer le changement de fréquence au moment opportun pour éviter la perte de données et effectuer le changement de fréquence demandé de manière transparente pour l'utilisateur du service.

L'invention concerne un procédé de notification du changement d'au moins un paramètre de l'émission d'au moins un service, par un appareil émetteur de services numériques radiodiffusés, à destination d'au moins un appareil de réception, ledit service ou lesdits services étant diffusé(s) au sein d'un flux de transport de données numériques émis dans un mode de transmission par découpage temporel par salves, ledit changement d'au moins un paramètre intervenant entre deux salves de transmission de données comportant les étapes suivantes :
- une étape de transmission au sein du flux d'une information temporelle indiquant le moment de début de transmission des données dudit service ou desdits services selon le ou les nouveaux paramètres,
- une étape de transmission au sein du flux d'une information relative à la nouvelle valeur dudit ou desdits paramètres utilisée pour la transmission dudit service ou desdits services,
- une étape de changement dudit ou desdits paramètres d'émission dudit service ou desdits services conformément à la nouvelle valeur notifiée et au moment notifié.

Selon un mode particulier de réalisation de l'invention, ledit paramètre est la fréquence d'émission.

Selon un mode particulier de réalisation de l'invention, l'information relative au moment du début de transmission et l'information relative à la nouvelle valeur dudit ou desdits paramètres sont transmises au sein d'une même structure de données au sein du flux.

Selon un mode particulier de réalisation de l'invention, la diffusion ayant lieu selon la norme DVB, ladite structure de données est transmise au sein de la table d'information sur le réseau, appelée NIT.

Selon un mode particulier de réalisation de l'invention, ladite structure est transmise au sein de la dernière salve de données émise sur l'ancienne fréquence.

Selon un mode particulier de réalisation de l'invention, les salves étant constituées de sections, ladite structure est transmise sous la forme d'une section au sein de la salve.

Selon un mode particulier de réalisation de l'invention, ladite section contient en outre l'identificateur ou les identificateurs dudit service ou desdits service courants ainsi que le nouvel identificateur ou les nouveaux identificateurs dudit service ou desdits services lorsqu'ils sont émis sur la nouvelle fréquence.

L'invention concerne également un procédé de réception par un appareil de réception d'au moins un service, émis par un appareil émetteur de services numériques radiodiffusés, ledit service ou lesdits services étant diffusés au sein d'un flux de transport de données numériques émis dans un mode de transmission par découpage temporel par salves, au moins un des paramètres de transmission dudit ou desdits services devant changer, ledit changement du ou des paramètres de transmission intervenant entre deux salves de transmission de données comportant les étapes suivantes :
- une étape de réception au sein du flux d'une information temporelle indiquant le moment du début de transmission des données dudit service ou desdits services selon le nouveau paramètre de transmission,
- une étape de réception au sein du flux d'une information relative à la nouvelle valeur dudit ou desdits paramètres utilisée pour la transmission dudit service ou desdits services,
- une étape de changement de la valeur dudit ou desdits paramètres de transmission dudit service ou desdits services conformément à la nouvelle fréquence notifiée et au moment notifié.

L'invention concerne également un dispositif émetteur de services numériques radiodiffusés à destination d'au moins un appareil de réception, lesdits services étant diffusés au sein d'un flux de transport de données numériques émis dans un mode de transmission par découpage temporel par salves, ledit dispositif devant effectuer un changement d'au moins un paramètre de transmission d'au moins un service diffusé, ledit changement de paramètre intervenant entre deux salves de transmission de données comportant :
- des moyens de notification dudit changement de paramètre de l'émission dudit service ou desdits services, comprenant les moyens suivants :
- un moyen de transmission au sein du flux d'une information temporelle indiquant le moment du début de transmission des données dudit service ou desdits services selon le ou les nouveaux paramètres,
- un moyen de transmission au sein du flux d'une information relative à la nouvelle valeur dudit ou desdits paramètres utilisée pour la transmission dudit service ou desdits services,
- un moyen de changer la valeur dudit ou desdits paramètres d'émission dudit service ou desdits services conformément à la nouvelle valeur notifiée et au moment notifié.

L'invention concerne également un dispositif de réception d'au moins un service, émis par un appareil émetteur de services numériques radiodiffusés, ledit service ou lesdits services étant diffusés au sein d'un flux de transport de données numériques émis dans un mode de transmission par découpage temporel par salves, au moins un paramètre d'émission dudit service ou desdits services devant changer, ledit changement de paramètre intervenant entre deux salves de transmission de données comportant les moyens suivants :
- un moyen de réception au sein du flux d'une information temporelle indiquant le moment du début de transmission des données dudit service ou desdits services sur le ou les nouveaux paramètres,
- un moyen de réception au sein du flux d'une information relative à la nouvelle valeur dudit ou desdits paramètres utilisée pour la transmission dudit service ou desdits services,
- un moyen de changer le ou les paramètres de réception dudit service ou desdits services conformément à la nouvelle valeur notifiée et au moment notifié.

L'invention concerne également une structure de données destinée à être transmise par un appareil émetteur de services numériques radiodiffusés, à destination d'au moins un appareil de réception, permettant la notification du changement d'au moins un paramètre de l'émission d'au moins un service, ledit service ou lesdits services étant diffusés au sein d'un flux de transport de données numériques émis dans un mode de transmission par découpage temporel par salves, ledit changement de paramètre intervenant entre deux salves de transmission de données. Cette structure de données est destinée à être transmise au sein dudit flux de transport de données et comprend une information temporelle indiquant le moment du début de transmission des données dudit service ou desdits services selon le ou les nouveaux paramètres et une information relative à la nouvelle valeur du ou des paramètres utilisée pour la transmission dudit service ou desdits services.

### Brève description des dessins

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 représente le schéma d'une émission de services par salves selon DVB-H.
La Fig. 2 représente un schéma plus détaillé de la structure de deux salves successives.
La Fig. 3 représente les sections typiques d'une salve.
La Fig. 4 représente la structure en section d'un exemple de réalisation de l'invention.
La Fig. 5 représente la table de changement de fréquence dans un exemple de réalisation de l'invention.
La Fig. 6 représente la structure des paramètres de temps réels dans DVB-H.

### Exposé détaillé de l'invention

Pour qu'un émetteur de services numériques puisse prendre l'initiative d'un changement de fréquence d'au moins un des services qu'il émet, il doit être en mesure d'annoncer ce changement aux récepteurs à l'écoute de ce service. En effet, ceux-ci doivent être en mesure de prendre connaissance du changement de fréquence à venir de l'émission du service et doivent, en outre, en connaître précisément le moment. De cette façon, ils peuvent être en mesure de recevoir sur la première fréquence toutes les données qui y sont émises, puis le moment venu, de changer de fréquence d'écoute pour recevoir toutes les données maintenant émises sur cette seconde fréquence. Ce changement interviendra pendant le temps mort entre deux salves de transmission de données dans un mode de transmission par découpage temporel.

Il faut donc avertir de manière fiable tous les terminaux à l'écoute du service que le changement va avoir lieu et indiquer le moment de ce changement de manière précise.

Il est d'une part nécessaire de mettre à jour les tables de signalisation du changement à venir. Il s'agit principalement, dans DVB, de la table NIT (« Network Information Table » en anglais). Cette table sert à décrire le réseau de diffusion et contient les informations fréquentielles de diffusion des flux de transport utilisés. Il est donc nécessaire de la mettre à jour pour indiquer la nouvelle fréquence utilisée lorsque celle-ci n'est pas déjà utilisée dans le réseau. Pour notifier aux récepteurs le changement de fréquence, il est alors possible d'introduire dans la NIT un nouveau descripteur qui va identifier le ou les services concernés, indiquer au moins la nouvelle fréquence utilisée et le moment du basculement vers la nouvelle fréquence. Pour les mêmes raisons de résistance aux latences pouvant être introduites lors de la transmission, il est proposé que cette indication du moment du basculement soit une indication relative à un autre événement du flux de transmission. Dans le cas du transport de ce nouveau descripteur au sein de la NIT, il est possible de prendre en référence de cette indication relative de temps, la fin de la transmission de la NIT. Il apparaîtra à l'homme du métier que tout autre évènement identifiable du flux peut servir de base de référence à cette indication temporelle relative, comme par exemple le début de la transmission de la NIT ou autre. Le descripteur va contenir donc, la différence de temps entre la fin de l'émission de la NIT et le début de l'émission de données du service concerné sur la nouvelle fréquence. Typiquement, dans le cas de DVB-H et d'une transmission de données par salve, il s'agira du début de la première salve de transmission de données du service sur la nouvelle fréquence. Ce descripteur contiendra donc au moins la nouvelle fréquence et l'indication du moment du basculement. Il pourra également contenir des informations complémentaires comme l'indication des services concernés ou toute autre information pertinente à propos de ce basculement.

Ce premier mécanisme de notification des récepteurs d'un basculement de fréquence possède quelques inconvénients. D'une part, un récepteur ne lit la NIT typiquement qu'une fois lors de sa découverte des services disponibles. Ensuite, dans un mode de fonctionnement où le récepteur est utilisé en réception et restitution d'un service donné, le récepteur est alors occupé à recevoir les salves de données concernant ce service et généralement coupe toute réception entre deux salves pour économiser son énergie. En l'absence de toute commande visant à accéder à la liste des services disponibles, il n'est pas dit que le récepteur lise la nouvelle NIT et accède donc à l'information sur le basculement. D'autre part, la fréquence d'émission de la NIT est typiquement de l'ordre de 30 secondes. Même si le changement de NIT est notifié au sein de la PMT («Program Map Table» en anglais) qui est, elle, diffusée à une fréquence de l'ordre de 100 ms, le processus de notification du terminal par l'intermédiaire de la NIT est un processus lent qui ne permet pas à l'émetteur de programmer un changement de fréquence rapide. Il est bien sûr toujours possible à l'émetteur d'augmenter la fréquence de diffusion de la NIT lorsqu'un changement est programmé, mais cela restera un processus relativement lent.

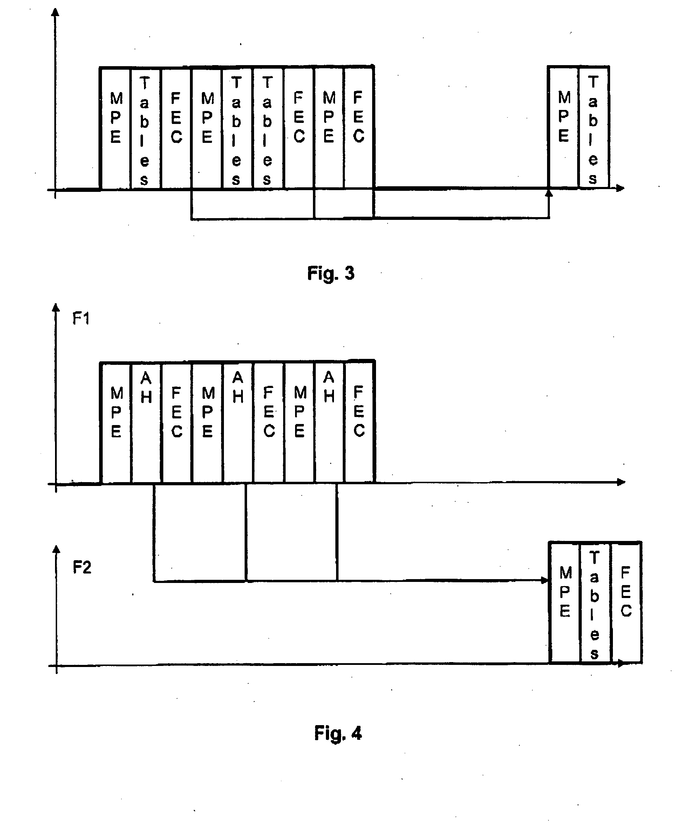

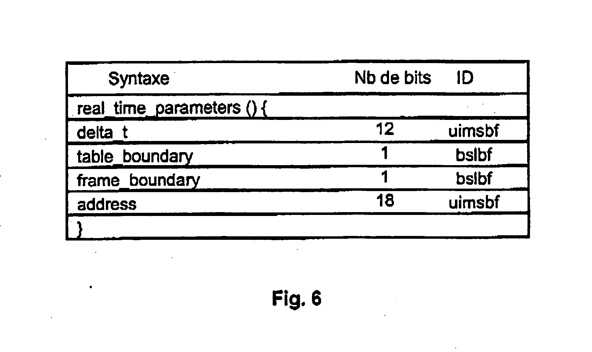

Pour pallier la relative lenteur de ce premier mode de notification d'un changement de fréquence de diffusion d'un service aux récepteurs, un second mode de notification est proposé. Dans ce nouveau mode de notification, le changement est notifié au niveau de la couche MAC (« Média Access Control » en anglais). La Fig. 3 illustre la structure d'une salve représentative dans le cas d'une transmission de données utilisant le protocole MPE et la correction d'erreur FEC (« Forward Error Correction » en anglais). Dans ce cas, la salve est constituée par des sections contenant les données à transmettre, dites sections MPE, des sections contenant les données de redondance permettant la correction d'erreur, dites sections MPE-FEC et des sections contenant les tables de signalisation et marquées tables sur la figure. Les sections de signalisation vont venir s'intercaler de manière quelconque entre les sections MPE et les sections MPE-FEC. Les sections MPE et MPE-FEC contiennent les données temps réel et en particulier le delta-t indiquant le début de la salve suivante. La structure de ces données temps réel est indiquée Fig. 6. On voit que cette structure contient une information de différence de temps permettant d'indiquer le moment de la prochaine salve et appelée delta_t. La structure contient également un champ appelé « table_boundary » indiquant si la section dans laquelle est incluse la structure est une frontière de table. Le champ appelé « frame_boundary » indique, lui, si la section dans laquelle est incluse la structure est une frontière de trame, c'est-à-dire la frontière de la trame MPE-FEC courante. Le champ appelé « address » indique la position octet du premier octet de données utiles dans la trame MPE-FEC. Cette structure ne permet pas l'indication d'une nouvelle fréquence. Ce champ permet d'indiquer temporellement la future salve, mais ne permet donc pas l'indication de la nouvelle fréquence. Une solution consiste à remplacer ce descripteur par une version élargie de ce descripteur avec une structure étendue ayant un paramètre supplémentaire permettant d'indiquer la nouvelle fréquence. Par exemple, il peut contenir un champ « hop_fréquency» de 32 bits. Si ce champ est à 0, alors il n'y a pas de changement de fréquence. Si celui-ci est à une valeur autre que 0, il décrit un changement de fréquence au sein de la même cellule identifiée par son identificateur « cell_id» sur tout le flux. L'identificateur « cell_id » est référencé dans le descripteur «cell_list_descriptor» qui est contenu dans la NIT. Le champ « PID_change_loop_length» que nous verrons plus loin sera alors nul.

Il faut être en mesure de répondre de manière plus large aux changements de fréquences et à la réorganisation d'allocation des services identifiés par leur identifiant « PID » au sein d'un réseau à fréquence unique (SFN pour « Single Frequency Network » en anglais), d'un réseau dit multi SFN (plusieurs réseaux à fréquence unique indépendants) ou d'un réseau à multiples fréquences (MFN pour « Multi-Frequency Network » en anglais). En effet, il est impossible à ce jour de revoir de manière simple et sans coupure de services les fréquences et les services qui lui sont associés.

Le deuxième mode de réalisation répond à cette problématique et repose sur l'emploi d'une nouvelle table, appelée par exemple, table de changement de fréquence, soit «Automatic_Handover» en anglais ou encore AH. Cette table «Automatic_Handover» est donc insérée dans les salves de données du service appelé à changer de fréquence. Cette table permet d'indiquer, dans un premier temps, non seulement le moment de la future salve mais encore la fréquence sur laquelle elle va avoir lieu. Un exemple d'insertion de cette table dans la structure de la salve est illustré Fig. 4. On peut y voir que les tables AH sont insérées parmi les tables de signalisation entre les sections MPE et les sections MPE-FEC. Dans un autre mode de réalisation et si le système le nécessite, la table peut contenir une liste d'identificateurs PID de services sujets à un changement de fréquence dans le cas d'une salve ayant des services en parallèle.

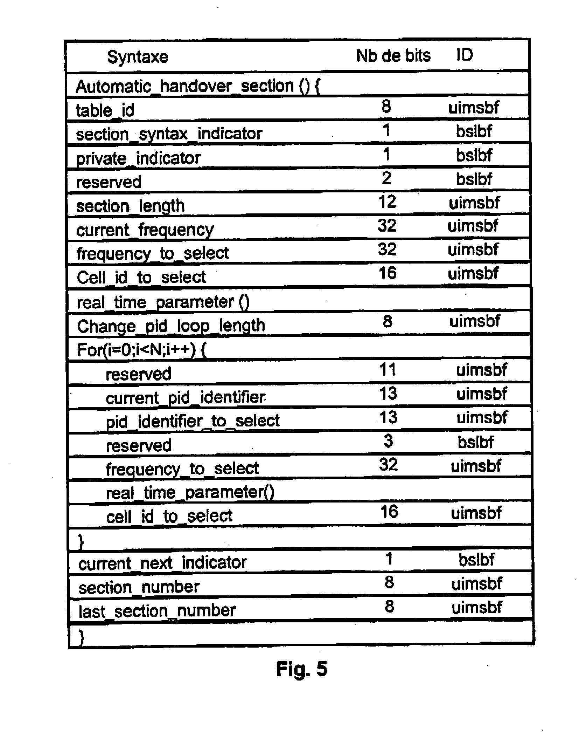

La structure de cette table dans l'exemple de réalisation de l'invention est donnée Fig. 5. Cette table possède, entre autres, un champ appelé « current_frequency » qui donne la fréquence courante sur laquelle est diffusé le service. Elle possède également un champ appelé « frequency_to_select» utilisé pour signaler la nouvelle fréquence utilisée pour la diffusion du service. On peut, par exemple, utiliser comme format de ce champ celui du descripteur utilisé pour signaler le flux. La fréquence peut être codée de manière à centrer celle-ci par rapport au descripteur « terrestrial_delivery_system_descriptor». D'autres descripteurs comme ceux prévus pour les systèmes de diffusion par satellite ou par câble peuvent être utilisés. Un dernier champ « cell_id_to_select» indique le numéro de cellule au sein d'un même réseau identifié par son identificateur «original_network_id». En effet, chaque cellule au sein d'un même réseau identifié par son original_network_id est unique.
Il est à noter que le passage d'un service d'un réseau à un autre n'est pas envisagé ici puisque nous ne faisons plus référence à la même entité (même diffuseur) et donc il est inutile de faire un tel référencement. S'il y a changement de fréquence, alors l'identificateur de flux de transport « transport_stream_id » reste constant.

Le champ « Pid_loop_length » indique le nombre d'octets qui suivent. Le champ « current_pid_identiner » est l'identificateur PIDs ayant un changement de service sur une autre fréquence.

De cette manière, un PID qui disparaît va voir son «pid_identifier_to_select» passer à 0x1FFF. Au sein de la même fréquence ou sur une autre fréquence, un PID passera sur le groupe PID=0x0010 à 0x1FFE.

De cette manière, le terminal recevant la salve courante contenant la table de changement de fréquence est à même de profiter du temps mort suivant la salve pour effectuer un changement de fréquence et se préparer à la réception de la salve suivante au moment indiqué sur la fréquence indiquée. Deux solutions sont possibles en ce qui concerne l'indication temporelle de paramètre temps réel présent dans les autres sections, c'est-à-dire les sections MPE et MPE-FEC. Une première solution consiste à y laisser l'indication temporelle du début de la salve suivante, bien que cette salve soit diffusée sur une autre fréquence. Une seconde solution consiste à la mettre à zéro en considérant que, sur la fréquence considérée, il n'y a pas de future salve. Cette deuxième solution peut paraître plus cohérente dans le cas où l'on autorise le basculement de fréquence d'un seul service au sein d'un flux de transport comportant plusieurs services et où les autres services continuent à être diffusés sur la fréquence courante. En effet, il faut envisager le cas où tout le flux est désormais émis sur une nouvelle fréquence, ce qui sera généralement le cas lorsque l'on cherchera à résoudre un conflit de fréquence et que la fréquence courante devra être libérée. Mais dans d'autres cas, il peut être intéressant d'effectuer un changement de fréquence sur la base d'un sous ensemble des services diffusés dans le flux. Dans ce cas, les deux fréquences continuent à être utilisées pour, par exemple, réorganiser les salves au sein d'une fréquence ou d'un groupe de fréquences formées par une cellule.

Il est à noter que cette table de changement de fréquence peut être généralisée à une table permettant d'indiquer d'autres changements dans la diffusion du service qu'un changement de fréquence. Par exemple, on peut utiliser une version élargie d'une telle table pour indiquer un changement d'identificateur PID du service diffusé. Un changement de PID n'est pas annoncé préalablement au changement aujourd'hui et cela peut entraîner une perte de service momentanée. Généralement, le nouvel identificateur PID est notifié via la table « PMT » une fois que le changement est effectif. L'utilisation de la table élargie permet de notifier le nouveau PID préalablement au changement ainsi que le moment du basculement, comme pour le changement de fréquence. Ainsi le récepteur est à même de planifier le changement et d'assurer la continuité de service. De cette manière, on peut notifier le changement d'un paramètre de diffusion du service et ce, quel que soit ce paramètre, Ia fréquence, le PID ou autre.

Les informations relatives aux différents types de modulation ne sont pas incluses dans cette table, puisque tous les types de modulation ne sont pas connus. Néanmoins, le système est conçu de manière à retrouver ces fréquences en comparant dans la liste des fréquences avec le « cell_frequency_link_descriptor» et le système de transport avec les «delivery_system_descriptor» (satellite/câble/terrestre) disponibles dans la NIT. Nous n'avons pas besoin des informations de l'identificateur de réseau « network_id » et d'identificateur de flux de transport « transport_stream_id » puisque si ceux-ci sont différents du flux courant alors nous avons un changement de plateforme IP.

## Revendications

1. Procédé de notification du changement d'au moins un paramètre de l'émission d'au moins un service par un appareil émetteur de services numériques radiodiffusés, à destination d'au moins un appareil de réception, ledit service ou lesdits services étant diffusés au sein d'un flux de transport de données numériques émis dans un mode de transmission par découpage temporel par salves, ledit changement d'au moins un paramètre intervenant entre deux salves de transmission de données comportant les étapes suivantes :
- une étape de transmission au sein du flux d'une information temporelle indiquant le moment du début de transmission des données dudit service ou desdits services selon le ou les nouveaux paramètres,
- une étape de transmission au sein du flux d'une information relative à la nouvelle valeur dudit ou desdits paramètres utilisée pour la transmission dudit service ou desdits services,
- une étape de changement dudit ou desdits paramètres d'émission dudit service ou desdits services conformément à la nouvelle valeur notifiée et au moment notifié.

2. Procédé selon la revendication 1 où ledit paramètre est la fréquence d'émission.

3. Procédé selon la revendication 1 où l'information temporelle indiquant le moment du début de transmission et l'information relative à la nouvelle valeur dudit ou desdits paramètres sont transmises au sein d'une même structure de données au sein du flux.

4. Procédé selon la revendication 3 où la diffusion ayant lieu selon la norme DVB, ladite structure de données est transmise au sein de la table d'information sur le réseau, appelée NIT.

5. Procédé selon la revendication 3 où ladite structure est transmise au sein de la dernière salve de données émise sur l'ancienne fréquence.

6. Procédé selon la revendication 5 où les salves étant constituées de sections, ladite structure est transmise sous la forme d'une section au sein de la salve.

7. Procédé selon la revendication 6 où ladite section contient en outre l'identificateur ou les identificateurs dudit service ou desdits services courants ainsi que le nouvel identificateur ou les nouveaux identificateurs dudit service ou desdits services lorsqu'ils sont émis sur la nouvelle fréquence.

8. Procédé de réception par un appareil de réception d'au moins un service, émis par un appareil émetteur de services numériques radiodiffusés, ledit service ou lesdits services étant diffusés au sein d'un flux de transport de données numériques émis dans un mode de transmission par découpage temporel par salves, au moins un des paramètres de transmission dudit ou desdits services devant changer, ledit changement du ou des paramètres de transmission intervenant entre deux salves de transmission de données comportant les étapes suivantes :
- une étape de réception au sein du flux d'une information temporelle indiquant le moment du début de transmission des données dudit service ou desdits services selon le nouveau paramètre de transmission,
- une étape de réception au sein du flux d'une information relative à la nouvelle valeur dudit ou desdits paramètres utilisée pour la transmission dudit service ou desdits services,
- une étape de changement de la valeur dudit ou desdits paramètres de transmission dudit service ou desdits services conformément à la nouvelle fréquence notifiée et au moment notifié.

9. Dispositif émetteur de services numériques radiodiffusés à destination d'au moins un appareil de réception, lesdits services étant diffusés au sein d'un flux de transport de données numériques émis dans un mode de transmission par découpage temporel par salves, ledit dispositif devant effectuer un changement d'au moins un paramètre de transmission d'au moins un service diffusé, ledit changement de paramètre intervenant entre deux salves de transmission de données comportant :
- des moyens de notification dudit changement de paramètre de l'émission dudit service ou desdits services, comprenant les moyens suivants :
- un moyen de transmission au sein du flux d'une information temporelle indiquant le moment du début de transmission des données dudit service ou desdits services selon le ou les nouveaux paramètres,
- un moyen de transmission au sein du flux d'une information relative à la nouvelle valeur dudit ou desdits paramètres utilisée pour la transmission dudit service ou desdits services,
- un moyen de changer la valeur dudit ou desdits paramètres d'émission dudit service ou desdits services conformément à la nouvelle valeur notifiée et au moment notifié.

10. Dispositif de réception d'au moins un service, émis par un appareil émetteur de services numériques radiodiffusés, ledit service ou lesdits services étant diffusés au sein d'un flux de transport de données numériques émis dans un mode de transmission par découpage temporel par salves, au moins un paramètre d'émission dudit service ou desdits services devant changer, ledit changement de paramètre intervenant entre deux salves de transmission de données comportant les moyens suivants :
- un moyen de réception au sein du flux d'une information temporelle indiquant le moment du début de transmission des données dudit service ou desdits services sur le ou les nouveaux paramètres,
- un moyen de réception au sein du flux d'une information relative à la nouvelle valeur dudit ou desdits paramètres utilisée pour la transmission dudit service ou desdits services,
- un moyen de changer le ou les paramètres de réception dudit service ou desdits services conformément à la nouvelle valeur notifiée et au moment notifié.

11. Structure de données destinée à être transmise par un appareil émetteur de services numériques radiodiffusés, à destination d'au moins un appareil de réception, permettant la notification du changement d'au moins un paramètre de l'émission d'au moins un service, ledit service ou lesdits services étant diffusés au sein d'un flux de transport de données numériques émis dans un mode de transmission par découpage temporel par salves, ledit changement de paramètre intervenant entre deux salves de transmission de données, **caractérisé en ce que** cette structure de données est destinée à être transmise au sein dudit flux de transport de données et comprend une information temporelle indiquant le moment du début de transmission des données dudit service ou desdits services selon le ou les nouveaux paramètres et une information relative à la nouvelle valeur du ou des paramètres utilisée pour la transmission dudit service ou desdits services.

## Claims

1. Method of notifying a change in at least one transmission parameter of at least one service by gel device for transmitting broadcast digital services, intended for at least one receiving device, said service or services being broadcast within a digital data transport stream transmitted in a mode of transmission by time-slicing in bursts, said change in at least one parameter occurring between two data transmission bursts, comprising the following steps:
- a step of transmitting, within the stream, time information indicating the time at which transmission of the data of said service or services according to the new parameter or parameters is started,
- a step of transmitting, within the stream, information relating to the new value of said parameter or parameters that is used for the transmission of said service or services,
- a step of changing said transmission parameter or parameters of said service or services in accordance with the notified new value and at the notified time.

2. Method according to claim 1, wherein said parameter is the transmission frequency.

3. Method according to claim 1, wherein the time information indicating the time at which transmission is started and the information relating to the new value of said parameter or parameters are transmitted within the same data structure within the stream.

4. Method according to claim 3, wherein, the broadcast taking place according to the DVB standard, said data structure is transmitted within a network information table called NIT.

5. Method according to claim 3, wherein said structure is transmitted within the last data burst transmitted on the old frequency.

6. Method according to claim 5, wherein, the bursts being constituted by sections, said structure is transmitted in the form of a section within the burst.

7. Method according to claim 6, wherein said section further contains the identifier or identifiers of said current service or services as well as the new identifier or identifiers of said service or services when they are transmitted on the new frequency.

8. Method of receiving, by a receiving device, at least one service transmitted by a device for transmitting broadcast digital services, said service or services being broadcast within a digital data transport stream transmitted in a mode of transmission by time-slicing in bursts, wherein at least one of the transmission parameters of said service or services is to change, said change in the transmission parameter or parameters occurring between two data transmission bursts, comprising the following steps:
- a step of receiving, within the stream, time information indicating the time at which transmission of the data of said service or services according to the new transmission parameter or parameters is started,
- a step of receiving, within the stream, information relating to the new value of said parameter or parameters
that is used for the transmission of said service or services,
- a step of changing the value of said transmission parameter or parameters of said service or services in accordance with the notified new frequency and at the notified time.

9. Device for transmitting broadcast digital services intended for at least one receiving device, said services being broadcast within a digital data transport stream transmitted in a mode of transmission by time-slicing in bursts, which device is to carry out a change in at least one transmission parameter of at least one broadcast service, said parameter change occurring between two data transmission bursts, comprising:
- means for notifying said parameter change of the transmission of said service or services, comprising the following means:
- a means for transmitting, within the stream, time information indicating the time at which transmission of the data of said service or services according to the new parameter or parameters is started,
- a means for transmitting, within the stream, information relating to the new value of said parameter or parameters that is used for the transmission of said service or services,
- a means for changing the value of said transmission parameter or parameters of said service or services in accordance with the notified new value and at the notified time.

10. Device for receiving at least one service transmitter by a device for transmitting broadcast digital services, said service or services being broadcast within a digital data transport stream transmitted in a mode of transmission by time-slicing in bursts, wherein at least one transmission parameter of said service or services is to change, said parameter change occurring between two data transmission bursts, comprising the following means:
- a means for receiving, within the stream, time information indicating the time at which transmission of the data of said service or services on the new parameter or parameters is started,
- a means for receiving, within the stream, information relating to the new value of said parameter or parameters that is used for the transmission of said service or services,
- a means for changing the receiving parameter or parameters of said service or services in accordance with the notified new value and at the notified time.

11. Data structure for transmission by a device for transmitting broadcast digital services, intended for at least one receiving device, permitting notification of a change in at least one transmission parameter of at least one service, said service or services being broadcast within a digital data transport stream transmitted in a mode of transmission by time-slicing in bursts, said parameter change occurring between two data transmission bursts, **characterised in that** the data structure is to be transmitted within said data transport stream and comprises time information indicating the time at which transmission of that data of said service or services according to the new parameter or parameters is started, and information relating to the new value of the parameter or parameters that is used for the transmission of said service or services.

## Patentansprüche

1. Verfahren zur Benachrichtigung über die Änderung mindestens eines Sendeparameters mindestens eines Dienstes durch ein Sendegerät für funkübertragene digitale Dienste zu einer Zieladresse mindestens eines Empfangsgeräts, wobei der Dienst bzw. die Dienste innerhalb eines Transportflusses von digitalen Daten gesendet werden, der in einem Zeitmultiplex-Übertragungsmodus ausgestrahlt wird, wobei die Änderung des mindestens einen Parameters zwischen zwei Datenübertragungsimpulsen erfolgt und folgende Schritte umfasst:
- einen Schritt der Übertragung einer Zeitinformation, die den Augenblick des Übertragungsbeginns der Daten des Dienstes bzw. der Dienste gemäß dem oder den neuen Parametern angibt, innerhalb des Flusses,
- einen Schritt der Übertragung einer auf den neuen Wert des oder der Parameter, der bzw. die für die Übertragung des Dienstes bzw. der Dienste verwendet wird bzw. werden, bezogenen Information innerhalb des Flusses,
- einen Schritt zum Ändern des oder der Sendeparameter des Dienstes bzw. der Dienste gemäß dem mitgeteilten neuen Wert und im mitgeteilten Augenblick.

2. Verfahren nach Anspruch 1, wobei der Parameter die Sendefrequenz ist.

3. Verfahren nach Anspruch 1, wobei die Zeitinformation, die den Augenblick des Übertragungsbeginns angibt, und die auf den neuen Wert des oder der Parameter bezogene Information innerhalb einer selben Datenstruktur im Fluss übertragen werden.

4. Verfahren nach Anspruch 3, wobei das Senden gemäß der DVB-Norm erfolgt, und die Datenstruktur innerhalb der als NIT bezeichneten Transpondertabelle übertragen wird

5. Verfahren nach Anspruch 3, wobei die Struktur innerhalb des letzten Datenimpulses übertragen wird, der auf der alten Frequenz gesendet wird.

6. Verfahren nach Anspruch 5, wobei die Impulse aus Abschnitten gebildet sind, und die Struktur in Form eines Abschnitts innerhalb des Impulses übertragen wird.

7. Verfahren nach Anspruch 6, wobei der Abschnitt des Weiteren die Kennung bzw.
Kennungen des laufenden Dienstes bzw. der Dienste enthält sowie die neue Kennung bzw. die neuen Kennungen für den Dienst oder die Dienste, wenn sie auf der neuen Frequenz gesendet werden.

8. Verfahren zum Empfangen mindestens eines Dienstes, der von einem Sendegerät für funkübertragene digitale Dienste gesendet wird, über ein Empfangsgerät, wobei der Dienst bzw. die Dienste innerhalb eines Transportflusses von digitalen Daten gesendet werden, der in einem Zeitmultiplex-Übertragungsmodus ausgestrahlt wird, wobei sich mindestens einer der Übertragungsparameter des bzw. der Dienste ändern muss, wobei die Änderung des bzw. der Übertragungsparameter zwischen zwei Datenübertragungsimpulsen erfolgt und folgende Schritte umfasst:
- einen Schritt des Empfangens einer Zeitinformation, die den Augenblick des Übertragungsbeginns der Daten des Dienstes bzw. der Dienste gemäß dem neuen Übertragungsparameter angibt, innerhalb des Flusses,
- einen Schritt des Empfangens einer auf den neuen Wert des oder der Parameter, der bzw. die für die Übertragung des Dienstes bzw. der Dienste verwendet wird bzw. werden, bezogenen Information innerhalb des Flusses,
- einen Schritt zum Ändern des Wertes des bzw. der Übertragungsparameter des Dienstes bzw. der Dienste gemäß der mitgeteilten neuen Frequenz und im mitgeteilten Augenblick.

9. Sendevorrichtung für funkübertragene digitale Dienste zu einer Zieladresse mindestens eines Empfangsgeräts, wobei die Dienste innerhalb eines Transportflusses von digitalen Daten gesendet werden, der in einem in einem Zeitmultiplex-Übertragungsmodus ausgestrahlt wird, wobei die Vorrichtung eine Änderung mindestens eines Übertragungsparameters mindestens eines gesendeten Dienstes vornehmen muss, wobei die Parameteränderung zwischen zwei Datenübertragüngsimpülsen erfolgt und Folgende umfasst:
- Mittel zum Benachrichtigen über die Änderung des Parameters zum Senden des Dienstes bzw. der Dienste, die folgende Mittel umfassen:
- ein Mittel zum Übertragen einer Zeitinformation, die den Augenblick des Übertragungsbeginns der Daten des Dienstes bzw. der Dienste gemäß dem oder den neuen Parametern angibt, innerhalb des Flusses,
- ein Mittel zum Übertragen einer auf den neuen Wert des oder der Parameter, der bzw. die für die Übertragung des Dienstes bzw. der Dienste verwendet wird bzw. werden, bezogenen Information innerhalb des Flusses,
- ein Mittel zum Ändern des Wertes des bzw. der Sendeparameter des Dienstes bzw. der Dienste gemäß dem mitgeteilten neuen Wert und im mitgeteilten Augenblick.

10. Empfangsvorrichtung mindestens eines Dienstes, der von einem Sendegerät für funkübertragene digitale Dienste gesendet wird, wobei der Dienst bzw. die Dienste innerhalb eines Transportflusses von digitalen Daten gesendet werden, der in einem Zeitmultiplex-Übertragungsmodus ausgestrahlt wird, wobei sich mindestens einer der Sendeparameter des bzw. der Dienste ändern muss, wobei die Änderung des Parameters zwischen zwei Datenübertragungsimpulsen erfolgt und folgende Mittel umfasst:
- ein Mittel für den Empfang einer Zeitinformation, die den Augenblick des Übertragungsbeginns der Daten des Dienstes bzw. der Dienste mit dem oder den neuen Parametern angibt, innerhalb des Flusses,
- ein Mittel für den Empfang einer auf den neuen Wert des oder der Parameter, der bzw. die für die Übertragung des Dienstes bzw. der Dienste verwendet wird bzw. werden, bezogenen Information innerhalb des Flusses,
- ein Mittel zum Ändern des oder der Empfangsparameter des Dienstes bzw.
der Dienste gemäß dem mitgeteilten neuen Wert und im mitgeteilten Augenblick.

11. Datenstruktur, die dazu bestimmt ist, durch ein Sendegerät für digitale funkübertragene Dienste zu einer Zieladresse mindestens eines Empfangsgeräts übertragen zu werden, welche die Benachrichtigung über die Änderung mindestens eines Sendeparameters mindestens eines Dienstes gestattet, wobei der Dienst bzw. die Dienste innerhalb eines Transportflusses von digitalen Daten gesendet werden, der in einem Zeitmultiplex-Übertragungsmodus ausgestrahlt wird, wobei die Änderung des Parameters zwischen zwei Datenübertragungsimpulsen erfolgt, **dadurch gekennzeichnet, dass** diese Datenstruktur dazu bestimmt ist, in dem Transportfluss von Daten übertragen zu werden und eine Zeitinformation, die den Augenblick des Übertragungsbeginns der Daten des Dienstes bzw. der Dienste gemäß dem oder den neuen Parametern angibt, und eine auf den neuen Wert des oder der Parameter, der bzw. die für die Übertragung des Dienstes bzw. der Dienste verwendet wird bzw. werden, bezogene Information umfasst.
